# FASCICULE DE BREVET EUROPEEN

(11) **EP 4 334 623 B1**
(45) Date de publication et mention de la délivrance du brevet: **29.01.2025**
(21) Numéro de dépôt: 22736294.4
(22) Date de dépôt: 04.07.2022
(51) Int. Cl.: F16L 27/12, F16L 37/113, F16L 25/12, F16L 37/107

(54) **CIRCUIT DE FLUIDE ET PROCÉDÉ DE RACCORDEMENT DE CANALISATIONS D'UN TEL CIRCUIT DE FLUIDE**
FLUIDKREISLAUF UND VERFAHREN ZUM VERBINDEN VON LEITUNGEN EINES SOLCHEN FLUIDKREISLAUFS
FLUID CIRCUIT AND METHOD FOR CONNECTING DUCTS OF SUCH A FLUID CIRCUIT

(30) Priorité: 07.07.2021 FR 2107360
(43) Date de publication de la demande: 13.03.2024
(73) Titulaire: Airbus Atlantic, 17300 Rochefort (FR)
(72) Inventeur: PERHERIN, Daniel, 44600 SAINT NAZAIRE (FR); BOULZE, Daniel, 31840 AUSSONNE (FR); ROUYARD, Dimitri, 44760 LES MOUTIERS EN RETZ (FR)
(74) Mandataire: Argyma
(86) Numéro de dépôt international: PCT/EP2022/068375
(87) Numéro de publication internationale: WO 2023/280741

(56) Documents cités:
- FR-A1- 3 082 587
- FR-A1- 3 102 529
- GB-A- 207 372
- US-A- 3 596 934
- US-B2- 7 828 339

## Description

### DOMAINE TECHNIQUE

La présente invention concerne le domaine des circuits de fluide dans un aéronef, par exemple, un circuit d'eau potable, d'eaux usées, de drainage, etc. L'invention concerne également le raccordement de canalisations d'un tel circuit de fluide.

De manière connue, un circuit de fluide comporte une pluralité de canalisations reliées mécaniquement et fluidiquement entre elles. Lors de la mise en place d'un circuit de fluide dans un aéronef, les canalisations sont solidarisées de manière indépendante à la structure de l'aéronef puis raccordées entre elles fluidiquement. Autrement dit, les canalisations ne sont pas mobiles les unes par rapport aux autres mais fixes lors d'un raccordement. Les canalisations sont sujettes aux dilatations thermiques. En pratique, un faible jeu axial peut être envisagé pour prendre en compte des déformations ou déplacements relatifs entre les canalisations et la structure porteuse environnante. Pour raccorder une première canalisation à une deuxième canalisation, il est connu d'utiliser un raccord de liaison qui doit être monté à l'interface entre la première canalisation et la deuxième canalisation afin d'assurer un raccordement étanche.

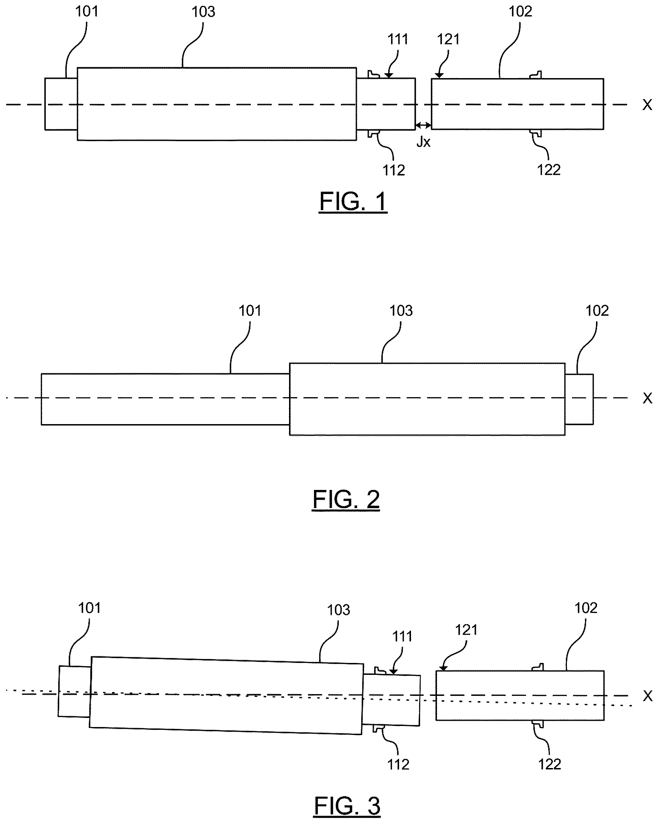

A titre d'exemple, en référence aux figures 1 et 2, il est représenté une première canalisation 101 et une deuxième canalisation 102 qui s'étendent longitudinalement selon un axe X et qui sont reliées de manière étanche par un raccord 103 apte à se translater axialement sur la première canalisation 101 pour coopérer avec l'extrémité de la deuxième canalisation 102. Chaque canalisation 101, 102 comporte une extrémité de connexion 111, 121 sur laquelle est monté un élément de connexion 112, 122.

En pratique, en référence à la figure 3, lorsque les canalisations 101, 102 sont positionnées, il est difficile de garantir que leurs extrémités de connexion 111, 121 soient parfaitement rectilignes du fait des tolérances de fabrication, des étapes de cintrage préalable, des tolérances de montage, etc. Un défaut d'alignement est encore plus susceptible d'apparaitre lorsque les canalisations 101, 102 sont réalisées en matériau thermoplastique. Du fait de ce défaut d'alignement, il est complexe de positionner le raccord de liaison 103 et d'assurer une étanchéité.

Une solution immédiate serait de prévoir un raccord 103 de grande rigidité qui viendrait contraindre les extrémités de connexion 111, 121 des canalisations 101, 102 afin de les aligner axialement. Un raccord 103 de grande rigidité nécessiterait d'appliquer des efforts importants sur les canalisations 101, 102 lors du montage et ne permettrait pas d'absorber axialement les effets de dilatation. On connaît par le document US3596934 un système de couplage de tubes selon l'art antérieur.

L'invention vise ainsi à éliminer au moins certains de ces inconvénients.

### PRESENTATION DE L'INVENTION

L'invention concerne un circuit de fluide, en particulier pour aéronef, comprenant
- au moins une première canalisation comprenant une première extrémité de connexion, s'étendant selon un premier axe et définissant une surface intérieure et une surface extérieure, la première extrémité de connexion comprenant un premier élément de connexion périphérique ainsi qu'un premier organe de liaison libre en translation et en rotation autour du premier axe,
- au moins une deuxième canalisation comprenant une deuxième extrémité de connexion, s'étendant selon un deuxième axe et définissant une surface intérieure et une surface extérieure, la deuxième extrémité de connexion comprenant un deuxième élément de connexion périphérique ainsi qu'un deuxième organe de liaison libre en translation et en rotation autour du deuxième axe, les extrémités de connexion des canalisations étant fixes et espacées d'un jeu de raccordement axial,
- un raccord de liaison, pour relier de manière étanche les deux extrémités de connexion, comprenant :
   - un manchon central comportant une enveloppe périphérique adaptée pour coulisser selon le deuxième axe, le manchon central étant configuré pour coopérer, à une première extrémité, avec le premier organe de liaison et, à une deuxième extrémité, avec le deuxième organe de liaison,
   - le manchon central comportant une pluralité de dents flexibles configurées pour coopérer avec le deuxième élément de connexion périphérique afin de corriger un éventuel défaut d'alignement entre le premier axe et le deuxième axe.

Grâce à l'invention, le manchon central peut être fabriqué de manière pratique puis relié aux organes de liaison ultérieurement. De manière avantageuse, les dents flexibles permettent de guider le manchon central tout en permettant son inclinaison lors du raccordement, ce qui permet de compenser de manière pratique tout défaut d'alignement.

De préférence, les dents flexibles du manchon central sont réparties de manière circonférentielle. Ainsi, la coopération est optimale pour tout type de défaut d'alignement.

De manière préférée, le deuxième organe de liaison comporte une pluralité de dents flexibles configurées pour coopérer avec la deuxième extrémité de connexion afin de corriger un éventuel défaut d'alignement entre le premier axe et le deuxième axe lors de la coopération du deuxième organe de liaison avec le manchon central. Les dents du deuxième organe de liaison permettent également de compenser un défaut d'alignement. Les efforts liés au désalignement sont ainsi répartis de manière optimale pour limiter le risque de défaut et de rupture.

De préférence, le premier organe de liaison comporte une pluralité de dents flexibles configurées pour coopérer avec la première extrémité de connexion afin de corriger un éventuel défaut d'alignement entre le premier axe et le deuxième axe lors de la coopération du premier organe de liaison avec le manchon central. De manière préférée, les dents flexibles sont réparties de manière circonférentielle.

De manière préférée, le premier organe de liaison comporte une portion de liaison ondulée reliant les dents flexibles. Une telle portion de liaison procure de la flexibilité aux dents et autorise un débattement.

Selon un aspect préféré, le premier organe de liaison comporte des ouvertures, de préférence cylindrique, formées dans la portion de liaison ondulée, pour écarter les dents flexibles. Outre une flexibilité améliorée, de telles ouvertures permettent de réduire les contraintes mécaniques dans le premier organe de liaison.

De préférence, la portion de liaison possède un coude extérieur ayant un premier rayon de courbure et un coude intérieur ayant un deuxième rayon de courbure inférieur au premier rayon de courbure de manière à assurer une flexibilité et un amortissement permettant de compenser les défauts d'alignement sans engendrer de contraintes.

Selon un aspect, chaque dent flexible est inclinée vers le premier axe d'un angle compris entre 2° et 5° afin d'assurer un contact progressif avec la première canalisation tout en limitant les efforts au montage.

De préférence, les dents flexibles du deuxième organe de liaison sont réparties de manière circonférentielle.

Selon un aspect de l'invention, le premier organe de liaison et le deuxième organe de liaison sont identiques. Cela permet de faciliter l'industrialisation. De plus, les efforts appliqués sur le raccord sont analogues à ses deux extrémités.

De manière préférée, au moins une extrémité du manchon central comporte un dispositif de serrage configuré pour coopérer avec un organe de liaison. Un organe de serrage permet de réaliser un serrage axial garantissant la pérennité du raccordement.

Selon un aspect préféré, le dispositif de serrage comporte au moins une fente de guidage, de préférence, de manière à permettre un serrage quart de tour. De manière avantageuse, un serrage axial est réalisé de manière pratique par rotation guidée d'un organe de liaison. Un serrage du type baïonnette est rapide et pratique.

Selon un aspect de l'invention, le raccord de liaison comporte un premier organe d'étanchéité et un deuxième organe d'étanchéité configurés pour coopérer respectivement avec la première extrémité de connexion et la deuxième extrémité de connexion en position de raccordement. Ainsi, l'étanchéité est garantie.

De préférence, les organes d'étanchéité possèdent des diamètres différents. Lorsque le manchon est réalisé par injection thermoplastique, il est prévu un angle de dépouille de manière à permettre son démoulage. Les organes d'étanchéité possèdent des diamètres différents afin d'assurer une étanchéité optimale tenant compte de cet angle de dépouille.

L'invention concerne également un aéronef comportant un circuit de fluide tel que présenté précédemment, dans lequel la première canalisation et la deuxième canalisation sont solidarisées à une structure de l'aéronef, les extrémités de connexion des canalisations étant fixes et espacées d'un jeu de raccordement axial.

L'invention concerne aussi un procédé de raccordement d'au moins une première canalisation et d'une deuxième canalisation au moyen d'un raccord de liaison d'un circuit de fluide tel que présenté précédemment, les extrémités de connexion des canalisations étant fixes et espacées d'un jeu de raccordement axial, le raccord de liaison s'étendant sur une extrémité de connexion d'une canalisation, le procédé comprenant une étape de déplacement du manchon central du raccord de liaison entre les extrémités de connexion, les dents flexibles du manchon central coopérant avec le deuxième élément de connexion périphérique afin de corriger un éventuel défaut d'alignement entre le premier axe et le deuxième axe.

De manière préférée, le procédé comprend une étape de coopération du deuxième organe de liaison avec le manchon central de manière à verrouiller le raccord de liaison.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique de deux canalisations avec un raccord en position d'attente.
La figure 2 est une représentation schématique de deux canalisations avec un raccord en position montée.
La figure 3 est une représentation schématique de deux canalisations dont les extrémités ne sont pas alignées axialement.
La figure 4 est une représentation schématique en perspective de deux canalisations avec un raccord selon l'invention en position de raccordement.
La figure 5 est une représentation schématique en coupe longitudinale de la figure 5.
La figure 6 est une représentation schématique en perspective d'un manchon central selon l'invention.
La figure 7 est une représentation schématique rapprochée des dents flexibles du manchon central de la figure 6.
La figure 8 est une représentation schématique de face d'un organe de liaison selon l'invention.
La figure 9 est une représentation schématique en coupe A-A de l'organe de liaison de la figure 8.
La figure 10 est une représentation schématique d'un circuit de fluide avant raccordement.
La figure 11 est une représentation schématique du circuit de fluide de la figure 10 après déplacement du manchon central.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

Il va être dorénavant présenté un circuit de fluide selon l'invention destiné à un usage aéronautique, en particulier, pour le transport de carburant, d'eau et d'oxygène, d'air, de gaz coupe-feu, réfrigération, etc.

Dans cet exemple, le circuit de fluide comprend une pluralité de canalisations qui sont accordées les unes avec les autres afin de guider un fluide. Pour une application aéronautique, les canalisations individuelles sont, dans un premier temps, solidarisées à une structure d'un aéronef puis, dans un deuxième temps, raccordées entre elles.

Par la suite, l'invention va être présentée pour le raccordement de deux canalisations d'un circuit de fluide. Néanmoins, l'invention s'applique également au raccordement de plus de deux canalisations, en particulier, trois canalisations.

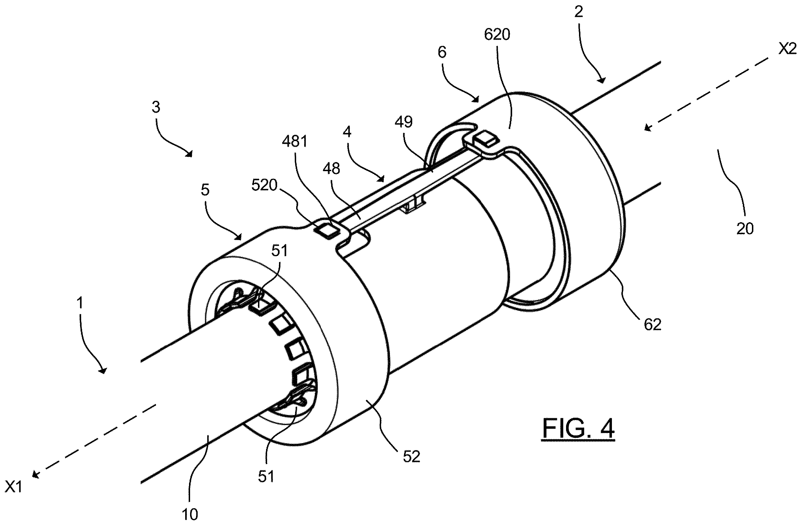

En référence à la figure 4, il est représenté une forme de réalisation d'un circuit de fluide selon l'invention qui comprend une première canalisation 1, une deuxième canalisation 2 et un raccord de liaison 3 monté à l'interface entre la première canalisation 1 et la deuxième canalisation 2, afin de raccorder fluidiquement la première canalisation 1 à la deuxième canalisation 2.

Dans cette forme de réalisation, chaque canalisation comporte un corps tubulaire qui est terminé à chaque extrémité par une extrémité de connexion. Le corps tubulaire de chaque canalisation comporte de manière préférée des portions cintrées de manière à permettre au circuit de fluide de relier différents équipements de manière pratique en s'affranchissant des contraintes de positionnement. De plus, chaque canalisation définit une surface intérieure, en contact avec le fluide à conduire, et une surface extérieure, opposée à la surface intérieure.

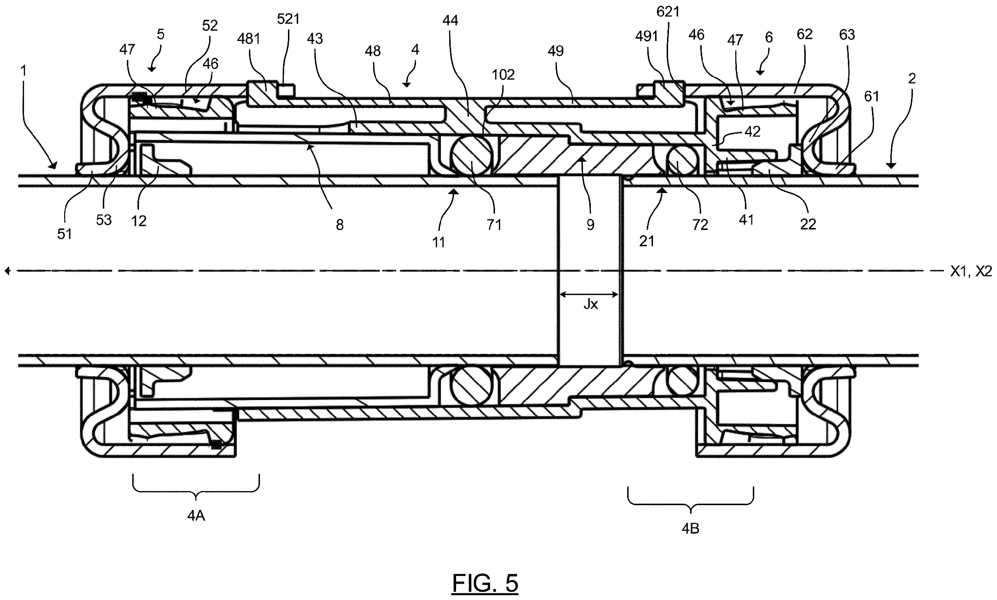

En référence à la figure 5, la première canalisation 1 comprend une première extrémité de connexion 11, s'étendant selon un premier axe X1 et définissant une surface intérieure et une surface extérieure. La première extrémité de connexion 11 comprend un premier élément de connexion 12, en particulier, une bague connexion périphérique en forme de L.

De manière analogue, toujours en référence à la figure 5, la deuxième canalisation 2 comprend une deuxième extrémité de connexion 21, s'étendant selon un deuxième axe X2 et définissant une surface intérieure et une surface extérieure. La deuxième extrémité de connexion 21 comprend un deuxième élément de connexion périphérique 22, en particulier, une bague connexion. Les axes X1, X2 sont de préférence alignés mais peuvent être décalés d'un décalage angulaire pouvant atteindre 10° ou d'un décalage vertical/latéral pouvant atteindre 10mm.

De préférence, les bagues de connexion 12, 22 sont des bagues fendues, de préférence encore, chaque bague de connexion 12, 22 possède une section en L. Les canalisations 1, 2 possèdent des structures analogues afin de permettre une industrialisation à moindres coûts. Il va de soi que les éléments de connexion 12, 22 pourraient se présenter sous d'autres formes, en particulier, une couronne crénelée ou un ergot. De manière préférée, chaque élément de connexion 12, 22 possède une épaisseur axiale de l'ordre de 2 mm et une longueur radiale comprise entre 4 mm et 8 mm par rapport à l'axe X1, X2.

Dans cette forme de réalisation, comme illustré à la figure 5, la distance entre le premier élément de connexion 12 et le bord d'extrémité de la première canalisation 1 est plus grande que la distance entre le deuxième élément de connexion 22 et le bord d'extrémité de la deuxième canalisation 2. Cela permet avantageusement de prémonter le raccord de liaison 3 entre le premier élément de connexion périphérique 12 et le bord d'extrémité de la première canalisation 1 comme cela sera présenté par la suite. Ainsi, il suffit de translater le raccord de liaison 3 logé sur la première canalisation 1 pour assurer l'étanchéité avec la deuxième canalisation 2.

Il va de soi que chaque extrémité de connexion 11, 21 pourrait également être formée par un embout de connexion qui serait monté de manière rapportée avec son élément de connexion 21, 22.

Comme illustré à la figure 5, les extrémités de connexion 11, 21 des canalisations 1, 2 sont fixes et espacées d'un jeu de raccordement axial Jx, compris entre 5mm et 10mm, qui est comblé par le déplacement du raccord de liaison 3 comme cela sera présenté par la suite.

Chaque canalisation 1, 2 possède un corps tubulaire qui comporte une ou plusieurs portions cintrées. Le diamètre du corps tubulaire et/ou de chaque extrémité de connexion est de préférence compris entre 12.7mm et 50.8mm. De manière préférée, chaque canalisation 1, 2 est réalisée en matériau plastique mais il va de soi que d'autres matériaux pourraient convenir, par exemple, un matériau métallique. Pour une réalisation métallique, le raccord de liaison 3 comporte de préférence une métallisation afin d'assurer la conductivité électrique. De manière préférée, le manchon central 4, les dents flexibles 41 et les organes de liaison 5, 6 comportent une métallisation, par exemple, au moins une bande de métallisation.

Sur la figure 5, les axes X1, X2 sont orientés de la droite vers la gauche. Comme cela sera présenté lors de l'exemple de mise en oeuvre, le raccord de liaison 3 permet de mettre en communication fluidique les deux canalisations 1, 2 qui sont écartées.

La première canalisation 1 comporte en outre un premier organe de liaison 5, libre en translation et en rotation autour du premier axe X1, configuré pour coopérer avec une première extrémité du raccord de liaison 3. De manière analogue, la deuxième canalisation 2 comporte en outre un deuxième organe de liaison 6, libre en translation et en rotation autour du deuxième axe X2, configuré pour coopérer avec une deuxième extrémité du raccord de liaison 3. Autrement dit, les organes de liaison 5, 6 permettent d'immobiliser et de sécuriser la position du raccord de liaison 3. Les organes de liaison 5, 6 ne sont pas positionnés entre les éléments de connexion 12, 22 mais extérieurement à ces derniers. De manière préférée, les organes de liaison 5, 6 sont montés de manière captive sur les extrémités de connexion 11, 21 de manière à éviter leur perte lors de la manipulation d'une canalisation 1, 2. Ainsi, le premier organe de liaison 5 est monté à gauche du premier élément de connexion 12 tandis que le deuxième organe de liaison 6 est monté à droite du deuxième élément de connexion 22. La structure et la fonction des organes de liaison 5, 6 seront présentées par la suite.

Comme cela sera présenté par la suite, le premier organe de liaison 5 et le manchon central 4 sont prémontés sur la première canalisation 1 tandis que le deuxième organe de liaison 7 est prémonté sur la deuxième canalisation 2. Le premier organe de liaison 5 est relié au manchon central 4 lors du prémontage, en particulier en atelier, tandis que le deuxième organe de liaison 6 est relié au manchon central 4 in situ, en particulier dans un aéronef.

Toujours en référence à la figure 5, le circuit de fluide comporte un raccord de liaison 3 configuré pour relier mécaniquement les deux extrémités de connexion 11, 21. Le raccord de liaison 3 comprend un manchon central 4, un premier organe d'étanchéité 71, un deuxième organe d'étanchéité 72, un premier écarteur 8 et un deuxième écarteur 9.

Dans cet exemple de réalisation, le manchon central 4 est configuré pour s'étendre extérieurement aux extrémités de connexion 11, 21 afin de permettre d'assurer une connexion fluidique entre les canalisations 1, 2. Le manchon central 4 est configuré pour comprimer les organes d'étanchéité 71, 72 afin d'assurer une étanchéité entre les extrémités de connexion 11, 21. Le manchon central 4 possède un diamètre intérieur légèrement plus faible que celui des organes d'étanchéité 71, 72 de manière à les comprimer radialement.

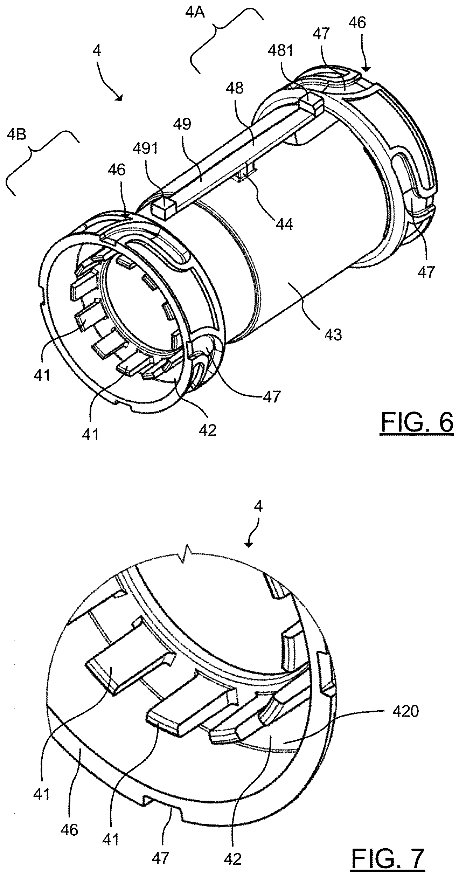

Comme illustré aux figures 5 et 6, le manchon central 4 se présente sous la forme d'une enveloppe périphérique qui s'étend axialement selon le premier axe X1. En position montée, le manchon central 4 est adapté pour coulisser selon le premier axe X1 sur l'extrémité de connexion 11 de la première canalisation 1. En référence à la figure 6, le manchon central 4 comporte une première portion 4A destinée à s'étendre du côté de la première canalisation 1 en position verrouillée et une deuxième portion 4B destinée à s'étendre du côté de la deuxième canalisation 2 en position verrouillée.

Le manchon central 4 comporte, au niveau de la deuxième portion 4B, une pluralité de dents flexibles 41 configurées pour coopérer avec le deuxième élément de connexion 22 afin de corriger un éventuel défaut d'alignement entre le premier axe X1 et le deuxième axe X2. Les dents flexibles 41 s'étendent parallèlement au premier axe X1 et possèdent la même position axiale de manière à former une couronne crénelée. Dans cet exemple, en référence à la figure 7, chaque dent flexible 41 possède une longueur comprise entre 2mm et 20mm, afin d'autoriser un débattement angulaire inférieur ou égal à 10°. Les dents flexibles 41 sont écartées angulairement les unes des autres, en particulier, de manière répartie.

En référence à la figure 5, les dents flexibles 41 sont alignées radialement avec le deuxième organe d'étanchéité 72 de manière permettre aux dents radiales flexibles 41 de déplacer le deuxième organe d'étanchéité 72 lors d'un déplacement longitudinal du manchon central 4 vers la première canalisation 1.

Le manchon central 4 comporte, au niveau de la deuxième portion 4B, une couronne radiale 42 s'étendant extérieurement aux dents flexibles 41 et permettant avantageusement de manipuler le raccord central 4 sans endommager les dents flexibles 41.

En référence aux figues 5 et 6, la première portion 4A du manchon central 4 est reliée à la deuxième portion 4B par un fourreau 43 sensiblement cylindrique dans lequel sont logés les organes d'étanchéité 71, 72 et les écarteurs 8, 9.

Le manchon central 4 comporte, au niveau chaque portion 4A, 4B, un dispositif de serrage 46 configuré pour coopérer avec un organe de liaison 5, 6. Dans cet exemple, en référence à la figure 6, chaque dispositif de serrage 46 comporte une pluralité de fentes de guidage 47, formées à la périphérie du dispositif de serrage 46, pour permettre un blocage axial suite à une rotation angulaire d'un organe de liaison 5, 6, notamment un serrage quart de tour. Il va de soi que d'autres moyens de serrage pourraient convenir en particulier un pas de vis.

Le manchon central 4 comporte en outre un premier organe de verrouillage 48 configuré pour coopérer avec le premier organe de liaison 5 et un deuxième organe de verrouillage 49 configuré pour coopérer avec le deuxième organe de liaison 6. De tels organes de verrouillage 48, 49 permettent d'empêcher tout retrait involontaire des organes de liaison 5, 6.

Comme illustré aux figures 5 et 6, les organes de verrouillage 48, 49 s'étendent longitudinalement selon le premier axe X1 de manière radialement extérieure au fourreau 43. Les organes de verrouillage 48, 49 sont reliés par une paroi radiale 44 au fourreau 43 permettant à chaque organe de verrouillage 48, 49 de pouvoir s'incliner vers le centre du manchon central 4 par rapport au premier axe X1 de manière à coopérer avec un organe de liaison 5, 6. Les organes de verrouillage 48, 49 comportent respectivement à leurs extrémités libres des dents de verrouillage 481, 491 en saillie radiale vers l'extérieur de manière à pouvoir s'introduire dans un orifice traversant d'un organe de liaison 5, 6.

De manière préférée, le manchon central 4 est monobloc, c'est-à-dire formé d'un seul tenant, ce qui permet de s'affranchir d'une articulation mécanique qui pourrait s'user ou représenter une zone fragile. De manière préférée, le manchon central 4 est réalisé dans un matériau plastique.

Dans cette forme de réalisation, en référence à la figure 5, le raccord de liaison 3 comporte un premier organe d'étanchéité 71 et un deuxième organe d'étanchéité 72 pour assurer l'étanchéité avec le manchon central 4 respectivement avec la première extrémité de connexion 11 et la deuxième extrémité de connexion 21. Chaque organe d'étanchéité 71, 72 possède une forme torique et est réalisé en un matériau élastique.

Dans cet exemple, le premier organe d'étanchéité 71 possède un plus grand diamètre que le deuxième organe d'étanchéité 72 de manière à permettre une inclinaison du raccord de liaison 3 par rapport au premier axe X1.

Toujours en référence à la figure 5, le raccord de liaison 3 comporte un premier écarteur 8, positionné entre le premier organe de connexion 11 et le premier organe d'étanchéité 71 et un deuxième écarteur 9 positionné longitudinalement entre les deux organes d'étanchéité 71, 72.

Le premier écarteur 8 et le deuxième écarteur 9 permettent avantageusement de maintenir les organes d'étanchéité 71, 72 et de les déplacer ensemble lors d'un déplacement du manchon central 4. A cet effet, les extrémités longitudinales du deuxième écarteur 9 sont incurvées de manière à épouser la former des organes d'étanchéité 71, 72 de section circulaire.

Lors d'un déplacement du manchon central 4 vers la droite (vers la deuxième canalisation 2), le premier organe de liaison 5 déplace le premier écarteur 8 qui déplace le premier organe d'étanchéité 71 qui déplace le deuxième organe d'étanchéité 72 grâce au deuxième écarteur 9. Ainsi, les organes d'étanchéité 71, 72 sont déplacés de manière concomitante, ce qui assure une étanchéité optimale lors de la mise en place ou du retrait du raccord de liaison 3.

Afin de maintenir le raccord de liaison 3 en position de raccordement entre les extrémités de connexion 11, 21, les organes de liaison 5, 6 verrouillent le manchon central 4. Dans cette forme de réalisation, les organes de liaison 5, 6 sont identiques et seul le premier organe de liaison 5 sera présenté par la suite par souci de clarté et de concision.

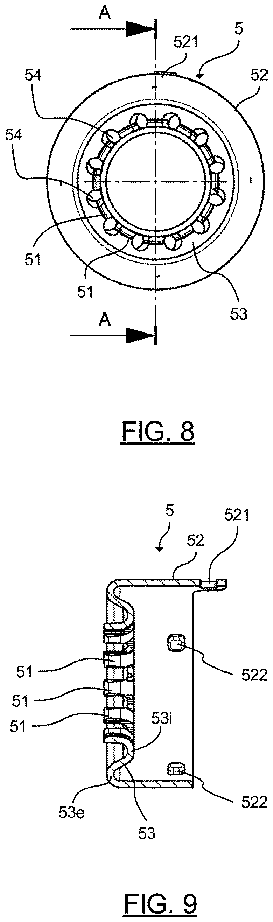

En référence aux figures 8 et 9, le premier organe de liaison 5 comporte une pluralité de dents flexibles 51 configurées pour coopérer avec la surface extérieure de la première canalisation 1 afin de corriger un éventuel défaut d'alignement entre le premier axe X1 et le deuxième axe X2. Les dents flexibles 51 s'étendent parallèlement au premier axe X1 et possèdent la même position axiale. Dans cet exemple, les dents flexibles 51 sont sensiblement analogues aux dents flexibles 41 préalablement présentées et sont organisées pour former une couronne.

En référence à la figure 8, les dents flexibles 51 sont écartées par des ouvertures 54 de forme cylindrique afin d'éviter une concentration de contraintes.

Les dents flexibles 51 sont reliées à une couronne annulaire extérieure 52 par l'intermédiaire d'une portion de liaison 53. Dans cet exemple, la portion de liaison 53 possède une section ondulée, de préférence en forme de S, de manière à augmenter la flexibilité et permettre une inclinaison relative entre les dents flexibles 51 (qui s'alignent avec le premier axe X1) et la couronne annulaire extérieure 52 qui s'aligne avec le manchon central 4 selon le deuxième axe X2.

De préférence, les ouvertures 54 sont formées dans la portion de liaison 53 configurée, d'une part, pour réaliser une liaison élastique afin de résister aux sollicitations et, d'autre part, pour assurer une rigidité suffisante pour permettre un réalignement des axes X1, X2. En référence à la figure 9, la portion de liaison 53 possède à cet effet une épaisseur de l'ordre de 1 à 2mm, un coude extérieur 53e ayant un rayon de courbure compris entre 2mm et 3mm et un coude intérieur 53i ayant un rayon de courbure compris entre 1mm et 2mm. De manière préférée, chaque dent flexible 51 est inclinée vers l'axe d'un angle compris entre 2° et 5° de manière à entrer en contact avec la surface extérieure de la première canalisation 1 et corriger son orientation en sollicitant la portion de liaison 53.

La couronne annulaire extérieure 52 comporte une ouverture traversante 521 pour recevoir la dent de verrouillage 481 du premier organe de verrouillage 48 du manchon central 4. La couronne annulaire extérieure 52 comporte en outre une pluralité de doigts radiaux intérieurs 522, répartis angulairement, configurés pour être guidés dans les fentes de guidage 47 du dispositif de guidage 46 formé sur le manchon central 4 afin de permettre un serrage axial.

De manière analogue, le deuxième organe de liaison 6 comporte une pluralité de dents flexibles 61 configurées pour coopérer avec la surface extérieure de la deuxième canalisation 2. Les dents flexibles 61 s'étendent parallèlement au deuxième axe X2.

Le raccord de liaison 3 selon l'invention comporte un nombre très limité d'éléments dans cette forme de réalisation, ce qui diminue son coût. En outre, de manière avantageuse, chaque élément peut être réalisé à bas coût, en particulier, par injection plastique, ce qui réduit notamment sa masse.

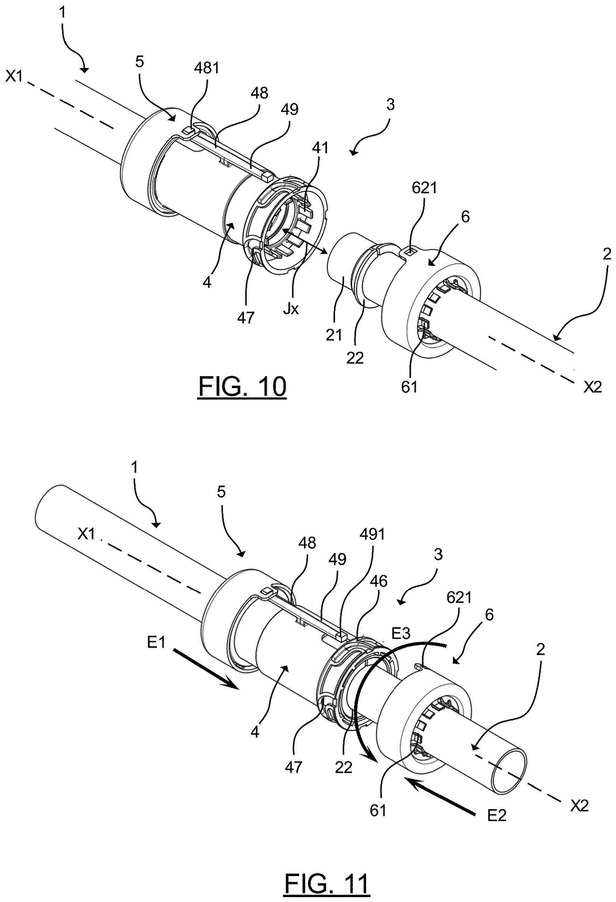

Selon un aspect préféré de l'invention, le raccord de liaison 3 est prémonté à l'extrémité de connexion 11 de la première canalisation 1 grâce au premier organe de liaison 5 comme illustré à la figure 10. Le deuxième organe de liaison 6 n'est lui pas connecté. Dans cette position de prémontage, les organes d'étanchéité 71, 72 sont en contact avec la première extrémité de connexion 11 et le premier organe de liaison 5 est positionné très à gauche du premier élément de connexion 12.

Un tel prémontage est très avantageux étant donné qu'il évite à un opérateur d'utiliser des éléments rapportés pour connecter les deux canalisations 1, 2. La première canalisation 1 peut ainsi être manipulée facilement avec son raccord de liaison 3. En effet, le raccord de liaison 3 peut être directement fermé et sécurisé. Un prémontage permet de manière avantageuse de positionner le raccord de liaison 3 lors de la fixation des canalisations 1, 2 à une structure aéronef, ce qui procure un gain de temps important. Il va néanmoins de soi que le raccord de liaison 3 pourrait être monté postérieurement.

Il va dorénavant être présenté un procédé de raccordement d'une première canalisation 1 et d'une deuxième canalisation 2 au moyen d'un raccord de liaison 3 selon une forme de réalisation de l'invention. Dans cet exemple, les canalisations 1, 2 ont été préalablement solidarisées à une structure d'un aéronef et ne sont pas mobiles les unes par rapport aux autres.

En référence à la figure 10, les extrémités de connexion 11, 21 des canalisations 1, 2 sont fixes et espacées d'un jeu de raccordement axial Jx, le raccord de liaison 3 est prémonté sur l'extrémité de connexion 11 de la première canalisation 1 comme expliqué précédemment.

Afin de réaliser un raccordement, en référence à la figure 11, le procédé comporte une étape de déplacement axial E1 du raccord de liaison 3 selon le premier axe X1 jusqu'à s'étendre à l'interface entre les deux extrémités de connexion 11, 21 des canalisations 1, 2. De manière avantageuse, ce déplacement peut être réalisé par un opérateur en utilisant uniquement une seule de ses mains, ce qui est pratique. Un tel mouvement est simple à réaliser étant donné qu'il suffit à l'opérateur de déplacer le manchon central 4 vers la droite de manière à déplacer le premier organe d'étanchéité 71 et le deuxième organe d'étanchéité 72 pour assurer l'étanchéité avec la première extrémité de connexion 11 et la deuxième extrémité de connexion 21 grâces aux écarteurs 8, 9.

Suite au déplacement en translation selon le premier axe X1, les dents flexibles 41 du manchon central 4 coopèrent avec le deuxième élément de connexion 22 de la deuxième canalisation 2 qui s'étend selon le deuxième axe X2. De manière avantageuse, tout défaut d'alignement est compensé par les dents flexibles 41.

Enfin, en référence à la figure 11, le deuxième organe de liaison 6 est déplacé vers la gauche (étape E2) de manière à coopérer avec le manchon central 4 par vissage quart de tour (étape E3) afin de réaliser une traction du manchon central 4 vers la droite afin d'immobiliser le raccord de liaison de manière stable 3 entre les éléments de connexion 12, 22 (Figure 5). La dent de verrouillage 491 du deuxième organe de verrouillage 4 du manchon central 4 coopère avec l'ouverture traversante 621 du deuxième organe de liaison 6. De manière avantageuse, les dents flexibles 61 du deuxième organe de liaison 6 permettent également de compenser les défauts d'alignement entre le manchon central 4 et la deuxième canalisation 2.

De manière avantageuse, même si les canalisations 1, 2 ne sont pas parfaitement rectilignes, il demeure possible de les raccorder de manière étanche et pérenne. Grâce à l'invention, deux canalisations 1, 2 peuvent être raccordées de manière physique et fluidique par un opérateur sans risque d'erreur et de manière pratique.

## Revendications

1. Circuit de fluide, en particulier pour aéronef, comprenant
• au moins une première canalisation (1) comprenant une première extrémité de connexion (11), s'étendant selon un premier axe (X1) et définissant une surface intérieure et une surface extérieure, la première extrémité de connexion (11) comprenant un premier élément de connexion périphérique (12) ainsi qu'un premier organe de liaison (5) libre en translation et en rotation autour du premier axe (X1),
• au moins une deuxième canalisation (2) comprenant une deuxième extrémité de connexion (12), s'étendant selon un deuxième axe (X2) et définissant une surface intérieure et une surface extérieure, la deuxième extrémité de connexion (12) comprenant un deuxième élément de connexion périphérique (22) ainsi qu'un deuxième organe de liaison (6) libre en translation et en rotation autour du deuxième axe (X2), les extrémités de connexion (11, 21) des canalisations (1, 2) étant fixes et espacées d'un jeu de raccordement axial (Jx),
• un raccord de liaison (3), pour relier de manière étanche les deux extrémités de connexion (11, 21), comprenant un manchon central (4) comportant une enveloppe périphérique adaptée pour coulisser selon le deuxième axe (X2), le manchon central (4) étant configuré pour coopérer, à une première extrémité, avec le premier organe de liaison (5) et, à une deuxième extrémité, avec le deuxième organe de liaison (6),
**caractérisé par le fait que** le manchon central (4) comporte une pluralité de dents flexibles (41) configurées pour coopérer avec le deuxième élément de connexion périphérique (22) afin de corriger un éventuel défaut d'alignement entre le premier axe (X1) et le deuxième axe (X2).

2. Circuit de fluide selon la revendication 1, dans lequel les dents flexibles (41) du manchon central (4) sont réparties de manière circonférentielle.

3. Circuit de fluide selon l'une des revendications 1 à 2, dans lequel le premier organe de liaison (5) comporte une pluralité de dents flexibles (51) configurées pour coopérer avec la première extrémité de connexion (11) afin de corriger un éventuel défaut d'alignement entre le premier axe (X1) et le deuxième axe (X2) lors de la coopération du premier organe de liaison (5) avec le manchon central (4).

4. Circuit de fluide selon l'une des revendications 1 à 3, dans lequel le premier organe de liaison (5) comporte une portion de liaison ondulée (53) reliant les dents flexibles (51).

5. Circuit de fluide selon la revendication 4, dans lequel le premier organe de liaison (5) comporte des ouvertures (54), de préférence cylindrique, formées dans la portion de liaison ondulée 53, pour écarter les dents flexibles (51).

6. Circuit de fluide selon l'une des revendications 4 à 5, dans lequel la portion de liaison 53 possède un coude extérieur 53e ayant un premier rayon de courbure et un coude intérieur 53i ayant un deuxième rayon de courbure inférieur au premier rayon de courbure

7. Circuit de fluide selon l'une des revendications 3 à 6, dans lequel chaque dent flexible (51) est inclinée vers le premier axe (X1) d'un angle compris entre 2° et 5°

8. Circuit de fluide selon l'une des revendications 1 à 7, dans lequel le premier organe de liaison (5) et le deuxième organe de liaison (6) sont identiques.

9. Circuit de fluide selon l'une des revendications 1 à 8, dans lequel au moins une extrémité du manchon central (4) comporte un dispositif de serrage (46) configuré pour coopérer avec un organe de liaison (5, 6).

10. Circuit de fluide selon l'une des revendications 1 à 9, dans lequel le dispositif de serrage (46) comporte au moins une fente de guidage, de préférence, de manière à permettre un serrage quart de tour.

11. Circuit de fluide selon l'une des revendications 1 à 10, dans lequel le raccord de liaison (3) comporte un premier organe d'étanchéité (71) et un deuxième organe d'étanchéité (72) configurés pour coopérer respectivement avec la première extrémité de connexion (11) et la deuxième extrémité de connexion (21) en position de raccordement.

12. Aéronef comportant un circuit de fluide selon l'une des revendications 1 à 11, dans lequel la première canalisation (1) et la deuxième canalisation (2) sont solidarisées à une structure de l'aéronef, les extrémités de connexion (11, 21) des canalisations (1, 2) étant fixes et espacées d'un jeu de raccordement axial (Jx).

13. Procédé de raccordement d'au moins une première canalisation (1) et d'une deuxième canalisation (2) au moyen d'un raccord de liaison (3) d'un circuit de fluide selon l'une des revendications 1 à 11, les extrémités de connexion (11, 21) des canalisations (1, 2) étant fixes et espacées d'un jeu de raccordement axial (Jx), le raccord de liaison (3) s'étendant sur une extrémité de connexion (11, 21) d'une canalisation (1, 2), le procédé comprenant :
• une étape de déplacement (E1) du manchon central (4) du raccord de liaison (3) entre les extrémités de connexion (11, 21), les dents flexibles (41) du manchon central (4) coopérant avec le deuxième élément de connexion périphérique (22) afin de corriger un éventuel défaut d'alignement entre le premier axe (X1) et le deuxième axe (X2).

14. Procédé de raccordement selon la revendication 13, comprenant une étape de coopération (E3) du deuxième organe de liaison (6) avec le manchon central (4) de manière à verrouiller le raccord de liaison (3).

## Patentansprüche

1. Fluidkreislauf, insbesondere für ein Luftfahrzeug, umfassend
• mindestens eine erste Leitung (1), die ein ersten Anschlussende (11) umfasst, sich gemäß einer ersten Achse (X1) erstreckt und eine Innenfläche und eine Außenfläche definiert, wobei das erste Anschlussende (11) ein erstes peripheres Anschlusselement (12) sowie ein erstes Verbindungsorgan (5) umfasst, das translatorisch und rotatorisch frei um die erste Achse (X1) ist,
• mindestens eine zweite Leitung (2), die ein zweites Anschlussende (12) umfasst, sich gemäß einer zweiten Achse (X2) erstreckt und eine Innenfläche und eine Außenfläche definiert, wobei das zweite Anschlussende (12) ein zweites peripheres Anschlusselement (22) sowie ein zweites Verbindungsorgan (6) umfasst, das translatorisch und rotatorisch frei um die zweite Achse (X2) ist, wobei die Anschlussenden (11, 21) der Leitungen (1, 2) fest und mit einem axialen Verbindungsspiel (Jx) beabstandet sind,
• ein Verbindungsstück (3), um die beiden Anschlussenden (11, 21) dicht zu verbinden, umfassend eine mittlere Hülse (4), die eine Umfangshülle aufweist, die geeignet ist, gemäß der zweiten Achse (X2) zu gleiten, wobei die mittlere Hülse (4) ausgelegt ist, um an einem ersten Ende mit dem ersten Verbindungsorgan (5) und an einem zweiten Ende mit dem zweiten Verbindungsorgan (6) zusammenzuwirken, **dadurch gekennzeichnet, dass** die mittlere Hülse (4) eine Vielzahl flexibler Zähne (41) aufweist, die ausgelegt sind, um mit dem zweiten peripheren Anschlusselement (22) zusammenzuwirken, um eine mögliche Fehlausrichtung zwischen der ersten Achse (X1) und der zweiten Achse (X2) zu korrigieren.

2. Fluidkreislauf nach Anspruch 1, wobei die flexiblen Zähne (41) der mittleren Hülse (4) umfangmäßig verteilt sind.

3. Fluidkreislauf nach einem der Ansprüche 1 bis 2, wobei das erste Verbindungsorgan (5) eine Vielzahl flexibler Zähne (51) aufweist, die ausgelegt sind, um mit dem ersten Anschlussende (11) zusammenzuwirken, um eine mögliche Fehlausrichtung zwischen der ersten Achse (X1) und der zweiten Achse (X2) beim Zusammenwirken des ersten Verbindungsorgans (5) mit der mittleren Hülse (4) zu korrigieren.

4. Fluidkreislauf nach einem der Ansprüche 1 bis 3, wobei das erste Verbindungsorgan (5) einen gewellten Verbindungsabschnitt (53) aufweist, der die flexiblen Zähne (51) verbindet.

5. Fluidkreislauf nach Anspruch 4, wobei das erste Verbindungsorgan (5) Öffnungen (54) aufweist, vorzugsweise zylindrisch, die in dem gewellten Verbindungsabschnitt (53) ausgebildet sind, um die flexiblen Zähne (51) zu beabstanden.

6. Fluidkreislauf nach einem der Ansprüche 4 bis 5, wobei der Verbindungsabschnitt (53) eine äußere Biegung (53e) mit einem ersten Krümmungsradius und eine innere Biegung (53i) mit einem zweiten Krümmungsradius aufweist, der kleiner als der erste Krümmungsradius ist.

7. Fluidkreislauf nach einem der Ansprüche 3 bis 6, wobei jeder flexible Zahn (51) in Richtung der ersten Achse (X1) in einem Winkel zwischen 2° und 5° geneigt ist.

8. Fluidkreislauf nach einem der Ansprüche 1 bis 7, wobei das erste Verbindungsorgan (5) und das zweite Verbindungsorgan (6) identisch sind.

9. Fluidkreislauf nach einem der Ansprüche 1 bis 8, wobei mindestens ein Ende der mittleren Hülse (4) eine Klemmvorrichtung (46) aufweist, die ausgelegt ist, um mit einem Verbindungsorgan (5, 6) zusammenzuwirken.

10. Fluidkreislauf nach einem der Ansprüche 1 bis 9, wobei die Klemmvorrichtung (46) mindestens einen Führungsschlitz aufweist, vorzugsweise derart, dass eine Klemmung um eine Vierteldrehung ermöglicht wird.

11. Fluidkreislauf nach einem der Ansprüche 1 bis 10, wobei das Verbindungsstück (3) ein erstes Dichtungsorgan (71) und ein zweites Dichtungsorgan (72) aufweist, die ausgelegt sind, um in Verbindungsposition jeweils mit dem ersten Anschlussende (11) und dem zweiten Anschlussende (21) zusammenzuwirken.

12. Luftfahrzeug, aufweisend einen Fluidkreislauf nach einem der Ansprüche 1 bis 11, wobei die erste Leitung (1) und die zweite Leitung (2) fest mit einer Struktur des Luftfahrzeugs verbunden sind, wobei die Anschlussenden (11, 21) der Leitungen (1, 2) fest und mit einem axialen Verbindungsspiel (Jx) beabstandet sind.

13. Verfahren zum Verbinden mindestens einer ersten Leitung (1) und einer zweiten Leitung (2) mittels eines Verbindungsstücks (3) eines Fluidkreislaufs nach einem der Ansprüche 1 bis 11, wobei die Anschlussenden (11, 21) der Leitungen (1, 2) fest und mit einem axialen Verbindungsspiel (Jx) beabstandet sind, wobei sich das Verbindungsstück (3) über ein Anschlussende (11, 21) einer Leitung (1, 2) erstreckt, wobei das Verfahren umfasst:
- einen Schritt des Verlagerns (E1) der mittleren Hülse (4) des Verbindungsstücks (3) zwischen den Anschlussenden (11, 21), wobei die flexiblen Zähne (41) der mittleren Hülse (4) mit dem zweiten peripheren Anschlusselement (22) zusammenwirken, um eine mögliche Fehlausrichtung zwischen der ersten Achse (X1) und der zweiten Achse (X2) zu korrigieren.

14. Verbindungsverfahren nach Anspruch 13, umfassend einen Schritt des Zusammenwirkens (E3) des zweiten Verbindungsorgans (6) mit der mittleren Hülse (4), um das Verbindungsstück (3) zu verriegeln.

## Claims

1. A fluid circuit, in particular for aircraft, comprising
- at least one first pipe (1) comprising a first connection end (11), extending along a first axis (X1) and defining an internal surface and an external surface, the first connection end (11) comprising a first peripheral connection element (12) as well as a first linking member (5) translationally and rotationally free about the first axis (X1),
- at least one second pipe (2) comprising a second connection end (12), extending along a second axis (X2) and defining an internal surface and an external surface, the second connection end (12) comprising a second peripheral connection element (22) as well as a second linking member (6) translationally and rotationally free about the second axis (X2), the connection ends (11, 21) of the pipes (1, 2) being fixed and spaced apart by an axial connection clearance (Jx),
- a linking connector (3), to sealingly link the two connection ends (11, 21), comprising a central sleeve (4) comprising a peripheral casing adapted to slide along the second axis (X2), the central sleeve (4) being configured to cooperate, at a first end, with the first linking member (5) and, at a second end, with the second linking member (6), **characterized in that** the central sleeve (4) comprises a plurality of flexible teeth (41) configured to cooperate with the second peripheral connection element (22) in order to correct a possible misalignment between the first axis (X1) and the second axis (X2).

2. The fluid circuit according to claim 1, wherein the flexible teeth (41) of the central sleeve (4) are circumferentially distributed.

3. The fluid circuit according to one of claims 1 to 2, wherein the first linking member (5) comprises a plurality of flexible teeth (51) configured to cooperate with the first connection end (11) in order to correct a possible misalignment between the first axis (X1) and the second axis (X2) during the cooperation of the first linking member (5) with the central sleeve (4).

4. The fluid circuit according to one of claims 1 to 3, wherein the first linking member (5) comprises a corrugated linking portion (53) linking the flexible teeth (51).

5. The fluid circuit according to claim 4, wherein the first linking member (5) comprises openings (54), preferably cylindrical, formed in the corrugated linking portion (53), to spread the flexible teeth (51) apart.

6. The fluid circuit according to one of claims 4 to 5, wherein the linking portion (53) has an external elbow (53e) having a first radius of curvature and an internal elbow (53i) having a second radius of curvature less than the first radius of curvature.

7. The fluid circuit according to one of claims 3 to 6, wherein each flexible tooth (51) is tilted towards the first axis (X1) by an angle of between 2° and 5°.

8. The fluid circuit according to one of claims 1 to 7, wherein the first linking member (5) and the second linking member (6) are identical.

9. The fluid circuit according to one of claims 1 to 8, wherein at least one end of the central sleeve (4) comprises a clamping device (46) configured to cooperate with a linking member (5, 6).

10. The fluid circuit according to one of claims 1 to 9, wherein the clamping device (46) comprises at least one guide slot, preferably, so as to allow quarter-turn clamping.

11. The fluid circuit according to one of claims 1 to 10, wherein the linking connector (3) comprises a first sealing member (71) and a second sealing member (72) configured to cooperate respectively with the first connection end (11) and the second connection end (21) in the connection position.

12. An aircraft comprising a fluid circuit according to one of claims 1 to 11, wherein the first pipe (1) and the second pipe (2) are made integral with a structure of the aircraft, the connection ends (11, 21) of the pipes (1, 2) being fixed and spaced apart by an axial connection clearance (Jx).

13. A method for connecting at least a first pipe (1) and a second pipe (2) by means of a linking connector (3) of a fluid circuit according to one of claims 1 to 11, the connection ends (11, 21) of the pipes (1, 2) being fixed and spaced apart by an axial connection clearance (Jx), the linking connector (3) extending over a connection end (11, 21) of a pipe (1, 2), the method comprising:
- a step of moving (E1) the central sleeve (4) of the linking connector (3) between the connection ends (11, 21), the flexible teeth (41) of the central sleeve (4) cooperating with the second peripheral connection element (22) in order to correct a possible misalignment between the first axis (X1) and the second axis (X2).

14. The connecting method according to claim 13, comprising a step of cooperating (E3) of the second linking member (6) with the central sleeve (4) so as to lock the linking connector (3).
